# EUROPÄISCHE PATENTSCHRIFT

(11) **EP 2 175 539 B1**
(45) Veröffentlichungstag und Bekanntmachung des Hinweises auf die Patenterteilung: **28.08.2019**
(21) Anmeldenummer: 09169688.0
(22) Anmeldetag: 08.09.2009
(51) Int. Cl.: H02J 1/06, H02J 1/10, H04L 12/10

(54) **Verfahren zum Regeln einer Busgerätespannung und Vorschalteinrichtung**
Method for regulating bus voltage and voltage regulation device
Procédé destiné à régler la tension d'un appareil de bus et dispositif d'entrée

(30) Priorität: 07.10.2008 DE 102008050636
(43) Veröffentlichungstag der Anmeldung: 14.04.2010
(73) Patentinhaber: Siemens Schweiz AG, 8047 Zürich (CH)
(72) Erfinder: FICHTNER, Norbert, 84069 Schierling (DE); MUNZ, Dieter, 91315 Höchstadt (DE); GÜNTHER, Harald, 90537 Feucht (DE)
(74) Vertreter: Maier, Daniel Oliver

(56) Entgegenhaltungen:
- DE-A1- 19 901 196
- DE-A1-102006 032 797
- US-A- 5 814 903
- US-A- 6 009 000

## Beschreibung

Die Erfindung betrifft ein Verfahren zum Regeln einer Busgerätespannung nach dem Oberbegriff von Patentanspruch 1 sowie eine Vorschalteinrichtung der im Oberbegriff des Patentanspruchs 14 angegebenen Art. Ein derartiges Verfahren und eine derartige Vorschalteinrichtung sind beispielsweise aus der Druckschrift DE 101 47 924 A1 bekannt.

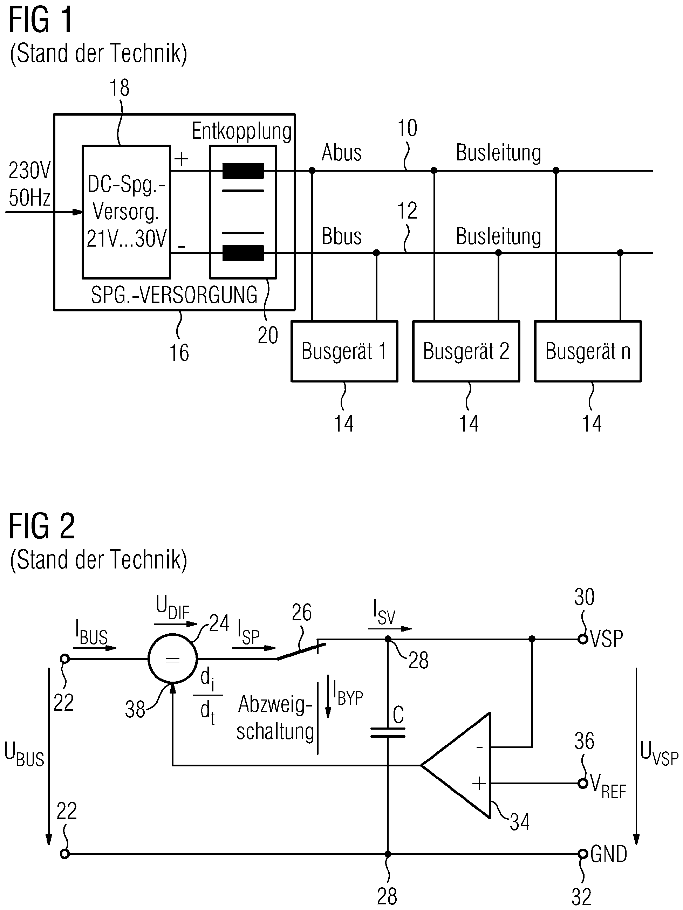

FIG 1 zeigt ein typisches Bussystem, wie es Stand der Technik ist. Das Bussystem umfasst zwei Busleitungen, nämlich eine erste Busleitung 10 (Abus) und eine zweite Busleitung 12 (Bbus). An den Busleitungen 10, 12 ist eine Mehrzahl von Busgeräten 14 angeschlossen. Exemplarisch gezeigt sind drei Busgeräte, nämlich Busgerät 1, Busgerät 2, Busgerät n, wobei diese eine beliebige Zahl n von Busgeräten repräsentieren. n kann dabei sehr groß werden, z.B. die Zahl 256 erreichen.

Es ist bei dem Bussystem vorgesehen, über die Busleitungen 10, 12, die Busgeräte 14 gleichzeitig mit Spannung und mit Datensignalen zur Ansteuerung der jeweiligen Busgeräte 14 zu versorgen. Eine Spannungsversorgung 16 empfängt über einen Eingang eine typische Netzspannung von 230 V mit 50 Hz Frequenz (es kann aber auch eine beliebige Netzspannung sein) und wandelt diese mittels eines Spannungswandlers 18 in eine Gleichspannung von zwischen 21 V und 30 V um. Dem Spannungswandler 18 ist ein Filter 20 zur Entkopplung der Spannungsversorgung von der Datenübertragung nachgeschaltet.

Da über die Busleitungen 10, 12 sowohl die von der Spannungsversorgung 18 erzeugte Gleichspannung als auch Datensignale übertragen werden, muss seitens der Busgeräte 14 gewährleistet sein, dass Spannungsversorgung und Datenübertragung sich nicht gegenseitig beeinträchtigen. Beispielsweise könnte die Datenübertragung durch die Spannungsversorgung in den Busteilnehmern bedämpft werden und dadurch die Übertragungsreichweite abnehmen.

In den Busgeräten gemäß dem Stand der Technik wurde aus diesem Grund ein Eingangsübertrager eingesetzt, welcher relativ groß und teuer ist und mit einer relativ großen induktiven Belastung einhergeht, die die maximale Anzahl der Busteilnehmer begrenzt.

Ohne einen Eingangsübertrager kommt ein Verfahren und eine Einrichtung zur Spannungsversorgung gemäß der Druckschrift DE 101 47 924 A1 aus. Die Vorschalteinrichtung aus dieser Druckschrift ist in FIG 2 schematisch dargestellt. An einem Eingang, und genauer gesagt über zwei Eingangsanschlüssen 22, liegt eine Busspannung U_{BUS} an. In Reihe geschaltet befindet sich eine Stromquelle 24, an welcher eine elektrische Spannung U_{DIF} abfällt. Der Stromquelle 24 ist ein elektrischer Schalter 26 nachgeschaltet. Der Strom I_{BUS} wird von der Stromquelle 24 zum Strom I_{SP} gewandelt. Die Stromquelle 24 ist über den Schalter 26 sowie über einen Knotenpunkt 28 mit einem ersten Ausgangsanschluss 30 elektrisch koppelbar. Mit dem Knotenpunkt 28 ist ein weiterer Knotenpunkt 28, welcher an einem Bezugspotential (Masse) anliegt, über einen Kondensator C gekoppelt. In FIG 2 auf der rechten Seite steht an dem ersten Ausgangsanschluss 30 eine Busgerätespannung U_{VSP} zur Verfügung, und zwar gegen das Bezugspotential 32.

Die DE 101 47 924 A1 verwendet den Ansatz, dass die Busgerätespannung U_{VSP} nahezu gleich der Busspannung U_{BUS} sein soll. Um die Datenübertragung zu ermöglichen, musste hier eine zusätzliche Lösung gefunden werden. Bei der Datenübertragung sinkt die Busspannung U_{BUS} nämlich um einige Volt ab und könnte daher kleiner als die Busgerätespannung U_{VSP} werden. Dann würde die Stromstärke des von der Stromquelle 24 abgegebenen Stroms I_{SP} und damit auch der Strom I_{BUS} auf Null sinken. Aufgrund dieser kurzfristigen großen Stromänderung würde die Datenübertragung negativ beeinflusst. Dies steht im Widerspruch dazu, dass eine hohe Anzahl von Busgeräten 14 an den Kommunikationsbus angeschlossen werden soll. Der Schalter 26 schaltet nun während der Datenübertragung und einer entsprechenden Absenkung der Busspannung U_{BUS} auf eine Abzweigschaltung um, so dass ein Abzweigstrom I_{BYP} ("Bypass"-Strom) fließt. Idealerweise wird I_{BYP} so gewählt, dass sich während der Datenübertragung I_{SP} und somit auch I_{BUS} nicht ändert.

Das Umschalten mit Hilfe des Schalters 26 erfolgt typischerweise nur während einer sehr kurzen Zeitdauer, z.B. während 35 µs. Während dieser Zeitdauer kann sich jedoch der Kondensator C entladen. Um den Kondensator nach dem Zurückkehren des Schalters 26 in die in FIG 2 gezeigte Stellung, bei welcher die Stromquelle 24 mit dem ersten Ausgangsanschluss 30 elektrisch gekoppelt ist, wieder aufzuladen, muss die Stromquelle 24 den Strom I_{SP} erhöhen. Wenn die Datenübertragung längere Zeit dauert und eine Vielzahl von Signalen übertragen werden, wird der Strom I_{SP} dauerhaft erhöht, solange die Datenübertragung andauert. Im zeitlichen Mittel soll der durch den Ausgangsanschluss 30 fließende Strom I_{SV} gleich dem Strom I_{SP} sein, welcher vor der Datenübertragung floss. Das zeitliche Mittel erstreckt sich über eine Vielzahl von Umschaltvorgängen mithilfe des Schalters 26.

Eine Erhöhung des Stroms I_{SP} ist auch bei einer Änderung der an den Ausgangsanschlüssen 30, 32 anliegenden Last erforderlich. Erhöht sich die Last rapide, kann die Busgerätespannung U_{VSP} einbrechen, was durch Erhöhung von I_{SP} ausgeglichen werden kann. I_{BYP} wird auch immer dann aktiviert, wenn die Busgerätespannung U_{VSP} so groß wird, dass der Strom I_{SP} nicht fließen kann, z.B. auch wenn eine Last weggeschaltet wird.

Um eine Erhöhung der Stromstärke des von der Stromquelle 24 abgegebenen Stroms I_{SP} einzuleiten, ist ein Operationsverstärker 34 vorgesehen. Dessen negativer Eingang ist mit dem Ausgangsanschluss 30 gekoppelt, an welchem die Busgerätespannung U_{VSP} anliegt. Der positive Eingang des Operationsverstärkers 34 ist mit einem Anschluss 36 verbunden, an welchem eine Referenzspannung V_{REF} anliegt, die üblicherweise eine von der Busspannung U_{BUS} abhängige Spannung ist, z.B. um 2 V kleiner als die Busspannung U_{BUS} ist. Der Ausgang des Operationsverstärkers 34 ist mit der Stromquelle 24 verbunden, was durch den Pfeil 38 symbolisiert ist. In der Stromquelle 24 sind Mittel zum Steuern der Stromstärke des von der Stromquelle 24 abgegebenen Stroms I_{SP} vorgesehen, welche das Ausgangssignal des Operationsverstärkers 34 empfangen. Diese Mittel können alternativ der Stromquelle 24 vorgeschaltet sein, also zwischen der Stromquelle 24 und dem Ausgang des Operationsverstärkers 34 angeordnet sein.

Die Druckschrift DE 101 47 924 A1 gibt keine weiteren Details zur Regelung der Stromstärke des Stroms I_{SP} an. Bei der Regelung der Stromstärke tritt folgende Schwierigkeit auf: Ist der Strom bei Empfang von Datensignalen zu regeln wie oben beschrieben, darf die Erhöhung der Stromstärke des Stroms I_{SP} pro Zeiteinheit nicht zu stark sein, damit die Stromänderung nicht Spannungsänderungen auf dem Bus bewirkt, welche fälschlicherweise als Signal interpretiert werden. Ist die Stromstärke hingegen bei Änderung der Last an den Ausgangsanschlüssen 30, 32 zu regeln, so ist die Stromstärke des Stroms I_{SP} möglichst schnell zu erhöhen.

Aus der Druckschrift DE 10 2006 032 797 A1 ist bereits ein Verfahren bekannt, welches dieser Schwierigkeit begegnet. Das dort beschriebene Verfahren beinhaltet, dass beim Regeln der Stromstärke des von der Stromquelle 24 abgegebenen Stroms I_{SP} eine Auswahl zwischen zumindest zwei Regelszenarien anhand vorgegebener Kriterien erfolgt. Bei Auswahl eines Regelszenarios wird die Stromstärke des Stroms I_{SP} mit einer ersten Änderung pro Zeiteinheit geändert, die aufgrund einer Kennlinie dieser ersten Änderung bezüglich einer vorgegebenen Größe festgelegt wird. Bei Auswahl eines zweiten Regelszenarios wird hingegen die Stromstärke des Stroms I_{SP} mit einer zweiten Änderung pro Zeiteinheit geändert. Durch die Einführung zweier verschiedener Regelszenarien kann der Strom I_{SP} je nach Regelsituation geeignet eingestellt werden. Hierbei würde man beim Empfang von Datensignalen das erste Regelszenario wählen, bei dem der Anstieg der Stromstärke des Stroms I_{SP} pro Zeiteinheit klein sein soll. Bei Änderung der Last würde man, wenn sie einen bestimmten Umfang überschreiten, das zweite Regelszenario auswählen, demgemäß die Stromstärke stärker pro Zeiteinheit ansteigt als beim ersten Regelszenario.

Dieses bekannte Verfahren beschreibt also eine Regelung der Stromstärke des von der Stromquelle 24 abgegebenen Stroms, bei welcher die Änderung der Stromstärke des Stroms I_{SP} je nach Regelsituation zwei unterschiedliche Werte annehmen kann. Bei der Auswahl zwischen den beiden Regelszenarien wird dabei ein Schwellwertkriterium verwendet. Somit wird von dem ersten Regelszenario zum zweiten Regelszenario genau dann übergegangen, wenn die Busgerätespannung U_{VSP} einen vorbestimmten Schwellwert unterschreitet.

Auch andere Verfahren und Schaltungen zur Kontrolle der einem Verbraucher zur Verfügung gestellten Spannung an einem Bus sind aus dem Stand der Technik bekannt und umfassend dokumentiert. Die DE 199 01 196 A1 offenbart beispielsweise eine Einrichtung, die es erlaubt, den variablen Strombedarf einer Anwenderelektronik dadurch zu decken, dass Grund- und Zusatzstromquellen bedarfsabhängig zumindest teilweise zu- bzw. abgeschaltet werden. Aus der US 5 814 903 A ist bekannt, wie der Regelkreis für den von einer Vielzahl von Solarzellen gelieferten Gesamtstrom stabil gehalten werden kann, indem einzelne Solarzellen nach einem bestimmten zeitlichen Muster zugeschaltet werden. Die US 6 009 000 A schließlich zeigt, wie sich die einzelnen Ströme, die von parallel geschalteten Spannungswandlern geliefert werden, über einen gemeinsamen Bus sehr genau angleichen lassen.

Der Erfindung liegt die Aufgabe zugrunde, ein Verfahren zum Regeln einer Busgerätespannung und eine Vorschalteinrichtung bereitzustellen, bei welchem und welcher Maßnahmen getroffen sind, die eine im Vergleich zum Stand der Technik, insbesondere im Vergleich zum Gegenstand gemäß DE 10 2006 032 797 A1, bedarfsgerechtere und an die gegenwärtig herrschende Betriebssituation angepasste Regelung insbesondere nicht nur unter Berücksichtigung eines Schwellwerts der Busgerätespannung gewährleisten.

Diese Aufgabe wird erfindungsgemäß durch ein Verfahren mit den Merkmalen nach Patentanspruch 1 sowie eine Vorschalteinrichtung, welche die Merkmale nach Patentanspruch 11 aufweist, gelöst.

Somit umfasst das erfindungsgemäße Verfahren, dass wenigstens während eines vorgebbaren Regelzeitintervalls beim Regeln eine Änderung der Stromstärke des durch die Stromquelle abgegebenen Stroms pro Zeiteinheit in Abhängigkeit von wenigstens einem Regelparameter kontinuierlich eingestellt wird.

Das kontinuierliche Einstellen der Änderung der Stromstärke pro Zeiteinheit beinhaltet gemäß der Erfindung, dass die Änderung der Stromstärke wenigstens einmal pro Zeiteinheit ausgeführt wird. Es wird unter dem Einstellen der Änderung der Stromstärke pro Zeiteinheit insbesondere auch ein Anpassen der Änderung an einen sich während des vorgebbaren Regelzeitintervalls ändernden Regelparameter betrachtet. Durch dieses kontinuierliche Einstellen der Änderung der Stromstärke pro Zeiteinheit wird eine bedarfsgerechte und an die gegenwärtige Betriebssituation bzw. die gegenwärtigen Betriebsbedingungen angepasste Regelung der Busgerätespannung ermöglicht. Man wird bevorzugt die Änderung der Stromstärke pro Zeiteinheit im Vergleich zu einer vorangegangenen Änderung pro Zeiteinheit erhöhen, wenn festgestellt wird, dass z.B. die Busgerätespannung und/oder die Busspannung, also mit anderen Worten die am Ausgang der Vorschalteinrichtung (siehe Figur 2) anliegende Spannung als auch die am Eingang der Vorschalteinrichtung anliegende Spannung, verhältnismäßig stark einbricht.

Zudem wird die jeweils gegenwärtige Änderung der Stromstärke des durch die Stromquelle abgegebenen Stroms pro Zeiteinheit in Abhängigkeit von einem jeweils gegenwärtigen Wert der Busgerätespannung und/oder in Abhängigkeit von derer jeweils gegenwärtigen Änderung pro Zeiteinheit eingestellt. Dabei wird eine Differenz der Busgerätespannung U_{VSP} zu der am Eingang der Vorschalteinrichtung anliegenden Busspannung oder auch zu einer Busgerätespannung, welche vorherrscht, wenn keine Daten übertragen werden, berücksichtigt. Dies kann beispielsweise derart aussehen, dass zunächst mit einer moderaten Änderung der Stromstärke pro Zeiteinheit begonnen wird und in Abhängigkeit von dieser Differenz die Änderung der Stromstärke pro Zeiteinheit erhöht wird. Erhöht sich die Differenz der Busgerätespannung zu der Busspannung, so wird die Änderung der Stromstärke pro Zeiteinheit im Vergleich zu einer vorangegangenen Änderung pro Zeiteinheit erhöht. Man wird hingegen die Änderung der Stromstärke pro Zeiteinheit im Vergleich zu einer vorangegangenen Änderung pro Zeiteinheit verringern, wenn sich die Differenz der Busgerätespannung zu der Busspannung verringert.

Die Änderung der Stromstärke des durch die Stromquelle abgegebenen Stroms pro Zeiteinheit kann in Abhängigkeit von der jeweils gegenwärtigen Stromstärke dieses Stroms kontinuierlich eingestellt werden. Es kann beispielsweise vorgesehen sein, dass die Stromstärke des durch die Stromquelle abgegebenen Stroms einen bestimmten Schwellwert nicht überschreitet. Andererseits kann die Änderung der Stromstärke pro Zeiteinheit zum jeweils gegenwärtigen Zeitpunkt erhöht werden, wenn die jeweils gegenwärtige Stromstärke relativ klein ist. Hierdurch kann auf einen Spannungsabfall rasch reagiert werden.

Alternativ oder zusätzlich kann die Änderung der Stromstärke pro Zeiteinheit in Abhängigkeit von der jeweils gegenwärtigen Stromstärke I_{SV} des über die Spannungsanschlüsse des Ausgangs der Vorschalteinrichtung fließenden Stroms kontinuierlich eingestellt werden.

Gemäß einer Ausführungsform ist vorgesehen, dass die Änderung der Stromstärke pro Zeiteinheit zum jeweils gegenwärtigen Zeitpunkt anhand einer Kennlinie dieser Änderung bezüglich einer vorgegebenen Größe festgelegt wird, wobei die Kennlinie aus einer Mehrzahl von abgelegten Kennlinien in Abhängigkeit von dem wenigstens einen Regelparameter ausgewählt wird. Für das kontinuierliche Einstellen der Änderung der Stromstärke pro Zeiteinheit steht somit insbesondere eine Mehrzahl von Kennlinien zur Verfügung, welche jeweils eine Abhängigkeit der Änderung der Stromstärke pro Zeiteinheit von der vorgegebenen Größe charakterisieren. Es kann dann eine Kennlinie zum jeweils gegenwärtigen Zeitpunkt ausgewählt werden und die Änderung der Stromstärke pro Zeiteinheit entsprechend dieser Kennlinie eingestellt werden. Bevorzugt legen die Kennlinien die jeweilige Änderung der Stromstärke pro Zeiteinheit in Abhängigkeit von der Stromstärke des über die Spannungsanschlüsse des Ausgangs der Vorschalteinrichtung fließenden Stroms (I_{SV} in Figur 2) fest. Der Begriff der Kennlinie kann beinhalten, dass zumindest für einen Abschnitt der vorgegebenen Größe, vorliegend also der Stromstärke I_{SV}, die vorgegebene Änderung konstant ist.

Gemäß einer alternativen Ausführungsform ist vorgesehen, dass die Änderung der Stromstärke pro Zeiteinheit mittels einer vorgebbaren Funktion in Abhängigkeit von dem wenigstens einen Regelparameter kontinuierlich berechnet wird. Durch die Verwendung einer mathematischen Funktion bzw. Formel kann zum jeweils gegenwärtigen Zeitpunkt die Änderung der Stromstärke pro Zeiteinheit berechnet werden und somit einen beliebigen Wert entsprechend der Genauigkeit dieser Berechnung annehmen. Somit wird eine bedarfsgerechte und an die gegenwärtig herrschende Situation angepasste Regelung der Busgerätespannung ermöglicht. Als Eingangsgrößen der vorgebbaren Funktion kann einer oder mehrere Parameter definiert werden, insbesondere der jeweils gegenwärtige Wert der Busgerätespannung und/oder die gegenwärtige Änderung derselben pro Zeiteinheit.

Während eines vorgebbaren weiteren Regelzeitintervalls kann die Regelung der Busgerätespannung auch anders aussehen, z.B. so, wie es beim Verfahren gemäß der DE 10 2006 032 797 A1 vorgesehen ist:
Demgemäß kann beim Regeln der Busgerätespannung während des vorgebbaren weiteren Regelzeitintervalls eine Auswahl zwischen Regelszenarien aus einer Mehrzahl von Regelszenarien anhand vorgegebener Kriterien erfolgen, wobei bei Auswahl eines jeweiligen Regelszenarios die Stromstärke des durch die Stromquelle abgegebenen Stroms mit einer dem Regelszenario zugeordneten Änderung pro Zeiteinheit, die aufgrund einer Kennlinie dieser Änderung bezüglich einer vorgegebenen Größe festgelegt wird, geändert werden. Hierbei wird man bei Empfang von Datensignalen ein Regelszenario wählen, bei welchem die Änderung der Stromstärke pro Zeiteinheit entsprechend diesem Regelszenario klein sein soll. Bei Änderungen der Last wird man, wenn sie einen bestimmten Umfang überschreiten, ein weiteres Regelszenario auswählen, bei welchem die Stromstärke stärker pro Zeiteinheit ansteigt. Diese Ausführungsform bietet eine aufwandsarme Regelung der Busgerätespannung. Somit kann durch die Kombination gerade dieser Ausführungsform mit dem erfindungsgemäßen kontinuierlichen Einstellen der Änderung der Stromstärke pro Zeiteinheit zwischen einer aufwandsarmen und einer an die gegenwärtig herrschende Betriebssituation angepassten Regelung zeitweise umgeschaltet werden.

Die vorgegebenen Kriterien können insbesondere die Auswertung bestimmter Betriebsparameter beinhalten. Da diese sich während der Regelung auch ändern können, ist gemäß einer bevorzugten Ausführungsform vorgesehen, dass die Auswahl eines Regelszenarios wiederholt erfolgt, so dass gegebenenfalls ein Wechsel des Regelszenarios stattfinden kann.

Die vorgegebenen Kriterien sind bei einer bevorzugten Ausführungsform so gestaltet, dass sowohl die Busspannung als auch die Busgerätespannung, mit anderen Worten die am Eingang der Vorschalteinrichtung anliegende Spannung als auch die am Ausgang der Vorschalteinrichtung anliegende Spannung, berücksichtigt werden. Dies kann beispielsweise derart aussehen, dass während des weiteren Regelzeitintervalls zunächst mit einem ersten Regelszenario begonnen wird und in Abhängigkeit von der Differenz der Busgerätespannung zu der Busspannung zu einem zweiten Regelszenario übergegangen wird. Hierbei kann insbesondere ein Schwellwertkriterium verwendet werden.

Bevorzugt ist die zur Festlegung der jeweiligen Änderung der Stromstärke pro Zeiteinheit verwendete Kennlinie eine Kennlinie der jeweiligen Änderung in Abhängigkeit von der Stromstärke des über die Spannungsanschlüsse fließenden Stroms. Auch beim Regeln während des weiteren Regelzeitintervalls kann der Begriff der Kennlinie beinhalten, dass zumindest für einen Abschnitt der vorgegebenen Größe, vorliegend also der Stromstärke des über die Spannungsanschlüsse fließenden Stroms, die vorgegebene Änderung der Stromstärke pro Zeiteinheit konstant ist.

Die erfindungsgemäße Vorschalteinrichtung ist dadurch gekennzeichnet, dass sie Mittel zum Steuern umfasst, die die Stromquelle im Betrieb derart ansteuern, dass der abgegebene Strom während des Regelns mit einer Änderung pro Zeiteinheit geändert wird, die in Abhängigkeit von wenigstens einem Regelparameter kontinuierlich eingestellt ist, wobei die Änderung der Stromstärke pro Zeiteinheit in Abhängigkeit von einem jeweils gegenwärtigen Wert der Busgerätespannung und/oder in Abhängigkeit von derer gegenwärtigen Änderung pro Zeiteinheit kontinuierlich eingestellt wird, wobei die Änderung der Stromstärke pro Zeiteinheit in Abhängigkeit von einer gegenwärtigen Differenz der Busgerätespannung zu einer Busgerätespannung, welche vorherrscht, wenn keine Daten übertragen werden, kontinuierlich eingestellt wird und wobei die Änderung der Stromstärke pro Zeiteinheit im Vergleich zu einer vorangegangenen Änderung pro Zeiteinheit erhöht wird, wenn sich die Differenz erhöht, und die Änderung der Stromstärke pro Zeiteinheit im Vergleich zu einer vorangegangenen Änderung pro Zeiteinheit verringert wird, wenn sich die Differenz verringert.

Nachfolgend werden bevorzugte Ausführungsformen der Erfindung unter Bezug auf die Zeichnung beschrieben. Dabei zeigen:
- FIG 1: in schematischer Darstellung ein Bussystem gemäß dem Stand der Technik;
- FIG 2: in schematischer Darstellung eine Vorschalteinrichtung gemäß dem Stand der Technik;
- FIG 3: einen Graphen des von einer Stromquelle der Vorschalteinrichtung abgegebenen Stroms bei erfindungsgemäßer Regelung zugeordnet zu einem Graphen der Busgerätespannung; und
- FIG 4: schematisch eine Mehrzahl von möglichen Abhängigkeiten eines Stromanstiegs von dem in der Vorschalteinrichtung fließenden Strom.

Die Erfindung macht von einer Vorschalteinrichtung Gebrauch, wie sie in FIG 2 gezeigt ist und oben beschrieben wurde. Lediglich die Ansteuerung der Stromquelle 24 erfolgt abweichend zum Stand der Technik in nachfolgend beschriebener erfindungsgemäßer Weise.

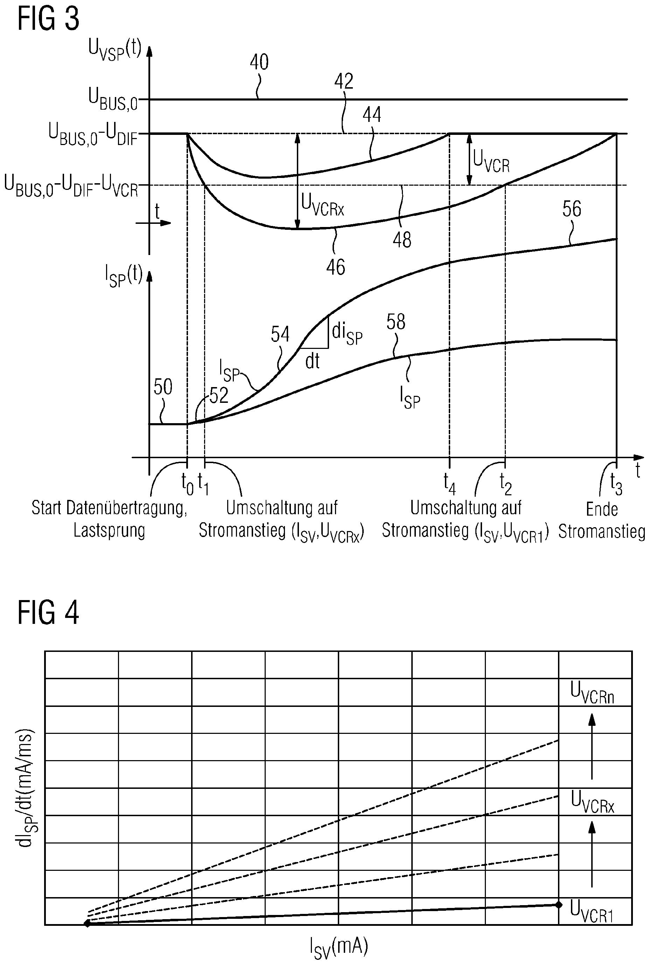

FIG 3 stellt in ihrem oberen Teil auf der y-Achse die Busgerätespannung U_{VSP}(t) in Abhängigkeit von der auf der x-Achse aufgetragenen Zeit t dar. Auf der y-Achse eingezeichnet sind drei konstante Werte. Zum einen ist ein Wert U_{BUS,0} als konstant eingezeichnet. Dies ist die Bus-Grundspannung, also die Busspannung, die herrscht, wenn keine Datenübertragung erfolgt. Zur Orientierung ist parallel zur x-Achse eine Gerade 40 auf der Höhe des y-Wertes U_{BUS,0} eingezeichnet. Ebenfalls konstant ist die über die Stromquelle 24 aus FIG 2 abfallende Spannung U_{DIF}. Somit ist auch die Differenz zwischen U_{BUS,0} und U_{DIF} konstant, siehe die Gerade 40 im Vergleich zur teilweise gestrichelt eingezeichneten Gerade 42 in FIG 3.

Die Gerade 42 entspricht der Busgerätespannung, welche vorherrscht, wenn keine Daten übertragen werden. Bei Datenübertragung oder kleinen Lastsprüngen der an den Ausgangsanschlüssen 30, 32 anliegenden Last bricht die Busgerätespannung U_{VSP} beispielsweise so ein, wie es anhand der Kurve 44 gezeigt ist. Bei großen Lastsprüngen bricht die Busgerätespannung U_{VSP} weiter ein, wie es die Kurve 46 zeigt.

Die Kurven 44 und 46 sind in Bezug zu setzen zu einer weiteren in FIG 3 eingezeichneten Geraden, nämlich der Geraden 48. Zur Definition eines Schwellwertkriteriums wurde ein konstanter Spannungswert U_{VCR} festgelegt, und die Spannung entsprechend der Geraden 42 wurde um diesen konstanten Wert von U_{VCR} verringert. Der Spannungswert U_{VCR} ist so gewählt, dass die Kurve 44 oberhalb der Geraden 48 bleibt und die Kurve 46 die Gerade 48 schneidet und sich dann unterhalb die Gerade 48 bewegt. Ist die Kurve 44 ein typischer Spannungsverlauf der Busgerätespannung bei Datenübertragung und die Kurve 46 ein typischer Verlauf der Busgerätespannung bei großen Lastsprüngen, so kann anhand eines Überschreitens der Gerade 48 erkannt werden, ob der Spannungseinbruch aufgrund von großen Lastsprüngen erfolgt. Zwischen Datenübertragung und kleinen Lastsprüngen kann nicht unterschieden werden, was aber auch nicht notwendig ist.

Es wird nun auf die Ansteuerung der Stromquelle 24 eingegangen: FIG 3 zeigt in ihrem unteren Teil den Verlauf der Stromstärke I_{SP}(t) (54) bei einer Regelung der Busgerätespannung U_{VSP} im Falle von großen Lastsprüngen. Der im unteren Teil von FIG 3 gezeigte Stromstärkengraph kann somit der Kurve 46 zugeordnet werden. Zum Zeitpunkt t₀ weicht die Spannungskurve 46 erstmals von der den konstanten Wert repräsentierenden Gerade 42 ab, d.h. der Spannungseinbruch beginnt. Vor dem Zeitpunkt t₀ war der von der Stromquelle 24 abgegebene Strom I_{SP} konstant gehalten worden, siehe Kurvenabschnitt 50. Nach Erkennen des Einbruchs der Busgerätespannung U_{VSP} zum Zeitpunkt t₀ beginnt die Stromquelle 24 den abgegebenen Strom I_{SP} zu erhöhen, siehe Kurvenabschnitt 52. Zum Zeitpunkt t₀ beginnt also ein Regelzeitintervall, während dessen die Änderung der Stromstärke des Stroms I_{SP} in Abhängigkeit von wenigstens einem Regelparameter kontinuierlich, also wenigstens einmal pro Zeiteinheit, eingestellt wird. Zwischen dem Zeitpunkt t₀ und dem Zeitpunkt t₁ wird der Stromanstieg so gewählt, dass er bei Datenübertragung keine Änderung in der Busgerätespannung U_{VSP} derart hervorruft, dass möglicherweise so erzeugte Spannungsänderungen mit Signalen verwechselt werden.

Dem kontinuierlichen Einstellen der Änderung der Stromstärke ΔI_{SP} des Stroms I_{SP} pro Zeiteinheit Δt können mehrere Regelparameter, nämlich die jeweils gegenwärtige Stromstärke des Stroms I_{SP}, die jeweils gegenwärtige Stromstärke des über die Ausgangsanschlüsse 30, 32 (siehe FIG 2) fließenden Stroms I_{SV}, der jeweils gegenwärtige Wert der Busgerätespannung U_{VSP} bzw. die jeweils gegenwärtige Differenz U_{VCRx} der Busgerätespannung U_{VSP} zu der durch die Geraden 42 angegebenen Spannung sowie die jeweils gegenwärtige Änderung der Busgerätespannung U_{VSP} pro Zeiteinheit Δt, zugrunde liegen. Dabei können entweder alle oder eine beliebige Kombination von diesen Parametern zur Einstellung der Änderung der Stromstärke ΔI_{SP} pro Zeiteinheit Δt verwendet werden.

Es werden bei der Einstellung der Änderung der Stromstärke ΔI_{SP} pro Zeiteinheit Δt zwei Alternativen in Betracht gezogen: Gemäß einer ersten Alternative kann die jeweils gegenwärtige Änderung der Stromstärke ΔI_{SP} des Stroms I_{SP} pro Zeiteinheit Δt mittels einer vorgebbaren mathematischen Funktion in Abhängigkeit von den oben erwähnten Parametern berechnet werden. Bei der zweiten Alternative steht eine Mehrzahl von abgelegten Kennlinien, wie in FIG 4 dargestellt, zur Verfügung, welche für unterschiedliche Differenzen U_{VCR1}, U_{VCRx}, U_{VCRn} (die in der angegebenen Reihenfolge steigen) der Busgerätespannung U_{VSP} zur Geraden 42 jeweils eine Abhängigkeit der Stromänderung ΔI_{SP} pro Zeiteinheit Δt von der Stromstärke des über die Ausgangsanschlüsse 30, 32 (FIG 2) fließenden Stroms I_{SV} darstellen. Dabei ist die jeweilige Kennlinie steiler, je höher die Differenz U_{VCRx} ist. Es wird somit bezugnehmend auf FIG 4 ersichtlich, dass mit größer werdender Differenz U_{VCR1}, U_{VCRx}, U_{VCRn} der Busgerätespannung U_{VSP} zu der Geraden 42 eine steilere Kennlinie ausgewählt und somit eine größere Änderung der Stromstärke ΔI_{SP} des Stroms I_{SP} pro Zeiteinheit Δt eingestellt wird.

Zum Zeitpunkt t₁ schneidet die Kurve 46 gerade die Gerade 48. Aufgrund des definierten Schwellwertkriteriums ist somit klar, dass der Spannungseinbruch, wie er sich in der Kurve 46 niederschlägt, auf einen großen Lastsprung zurückzuführen ist, und dass keine Datenübertragung Ursache des Spannungseinbruchs ist. Deswegen besteht keine weitere Notwendigkeit mehr, den Strom I_{SP} wie im Abschnitt 52 mit relativ moderatem Stromanstieg zu erhöhen. Stattdessen wird die Änderung der Stromstärke ΔI_{SP} des Stroms I_{SP} pro Zeiteinheit Δt kontinuierlich erhöht. Dabei wird die Änderung der Stromstärke ΔI_{SP} des Stroms I_{SP} pro Zeiteinheit Δt mit steigender Differenz U_{VCRx} der Busgerätespannung U_{VSP} zur Geraden 42 bzw. mit steigendem Spannungseinbruch kontinuierlich erhöht (siehe Abschnitt 54).

Diese kontinuierliche Erhöhung der Änderung der Stromstärke ΔI_{SP} des Stroms I_{SP} pro Zeiteinheit Δt wird solange vorgenommen, bis es nicht mehr zu einem weiteren Spannungsabfall kommt, also bis die Busgerätespannung U_{VSP} anfängt, wieder zu steigen. Durch Bezugnahme auf die Kurve 46 wird ersichtlich, dass der Einbruch der Busgerätespannung U_{VSP} beim kontinuierlichen Erhöhen der Änderung der Stromstärke des Stroms I_{SP} pro Zeiteinheit Δt zum Stillstand kommt. Dieser Stillstand zeigt sich darin, dass sich der Spannungsabfall im Rahmen der Kurve 46 nach dem Zeitpunkt t₁ immer weniger steil fortsetzt, bis es schließlich nicht mehr zu einem weiteren Spannungsabfall kommt, sondern die Spannung wieder steigt.

Fängt die Busgerätespannung U_{VSP} an, wieder zu steigen, so wird die Änderung der Stromstärke des I_{SP} mit kleiner werdender Differenz U_{VCRx} der Busgerätespannung U_{VSP} zur Geraden 42 verringert. Zum Zeitpunkt t₂ schneidet die steigende Busgerätespannung U_{VSP} abermals die Gerade 48, wobei sich die Differenz U_{VCRx} der Busgerätespannung U_{VSP} zur Geraden 42 verringert. Ab dem Zeitpunkt t₂ wird die Änderung der Stromstärke ΔI_{SP} des Stroms I_{SP} pro Zeiteinheit Δt weiterhin verringert. Dabei wird die Änderung der Stromstärke ΔI_{SP} des Stroms I_{SP} pro Zeiteinheit Δt wieder derart gewählt, dass sie bei Datenübertragung keine Änderung in der Spannung hervorruft. Zum Zeitpunkt t₃ erreicht die Busgerätespannung U_{VSP} dann wieder den Wert entsprechend der Geraden 42, so dass keine weitere Erhöhung des von der Stromquelle 24 abgegebenen Stroms I_{SP} mehr notwendig ist. Zum Zeitpunkt t₃ endet auch das oben genannte Regelzeitintervall.

In FIG 3 anhand des Verlaufs 58 des Stroms I_{SP} dargestellt ist des Weiteren die Regelung des Stroms I_{SP}, wie sie bei einem Spannungseinbruch der Busgerätespannung U_{VSP} gemäß der Kurve 44 erfolgt. Auch hier wird zum Zeitpunkt t₀, also zum Beginn des Spannungseinbruchs und zum Beginn des Regelzeitintervalls, die Stromstärke des Stroms I_{SP} mit einer moderaten Änderung ΔI_{SP} pro Zeiteinheit Δt erhöht. Da die Kurve 44 an keiner Stelle die Gerade 48 schneidet und überschreitet, verlängert sich dann der Abschnitt 52, insbesondere erfolgt zum Zeitpunkt t₁ keine deutliche Erhöhung der Änderung der Stromstärke ΔI_{SP} pro Zeiteinheit Δt. Der Strom I_{SP} steigt also mit einem moderaten Stromanstieg an, bis der Zeitpunkt t₄ erreicht ist, indem die Kurve 44 wieder auf den Wert entsprechend der Geraden 42 zurückkehrt. Dann wird das Regelintervall beendet.

In FIG 3 nicht dargestellt ist die Regelung des Stroms I_{SP}, wie sie beim Verfahren gemäß der DE 10 2006 032 797 A1 stattfindet. Zusätzlich zu dem hier betrachteten Beispiel kann ein weiteres Regelzeitintervall definiert werden, während dessen die Regelung des Stroms I_{SP} auf die in dieser Druckschrift beschriebene Art und Weise erfolgt. Demgemäß kann eine Auswahl zwischen Regelszenarien aus einer Mehrzahl von Regelszenarien anhand vorgegebener Kriterien erfolgen. Dabei wird die Stromstärke des Stroms I_{SP} mit einer einem bestimmten Regelszenario zugeordneten Änderung ΔI_{SP} pro Zeiteinheit Δt geändert. Diese Änderung ΔI_{SP} wird anhand einer Kennlinie dieser Änderung bezüglich einer vorgegebenen Größe, wie beispielsweise bezüglich der Stromstärke des über die Ausgangsanschlüsse 30, 32 fließenden Stroms I_{SV}, festgelegt.

In FIG 3 wird beispielhaft von Stromanstiegen ΔI_{SP} während des Regelzeitintervalls zwischen dem Zeitpunkt t₀ und dem Zeitpunkt t₃ ausgegangen. Die Stromsteilheit könnte jedoch auch einen negativen Wert haben, und zwar sollte sie dies beim Wegschalten von Lasten an U_{VSP}, wenn die Stromstärke des Stroms I_{SP} abnehmen würde. Dieser negative Wert des Stromanstiegs ΔI_{SP} könnte beispielsweise ein anhand einer der Kennlinien gemäß FIG 4 bestimmter Wert sein, nur mit negativem Vorzeichen.

## Patentansprüche

1. Verfahren zum Regeln einer Busgerätespannung (U_{VSP}) mittels einer Vorschalteinrichtung, an deren Eingang eine Busspannung (U_{BUS}) über einen Kommunikationsbus zugeführt wird, und die Spannungsanschlüsse (30, 32) für die Busgerätespannung (U_{VSP}) aufweist, an denen eine variable Last anliegt, wobei bei Empfang von Datensignalen über den Kommunikationsbus Strom, der bei Abwesenheit von Datensignalen über die Spannungsanschlüsse (30, 32) fließt, während eines Signal-Zeitintervalls über einen Schalter (26) in eine Abzweigschaltung geleitet wird, wobei die Vorschalteinrichtung eine Stromquelle (24) aufweist, die einen Strom (I_{SP}) abgibt, dessen Stromstärke konstant ist, solange kein Regeln erfolgt, und dessen Stromstärke geändert wird, wenn aufgrund eines Abweichens der Busgerätespannung (U_{VSP}) von einem Sollwert (V_{REF}) ein Regeln eingeleitet wird,
wobei wenigstens während eines vorgebbaren Regelzeitintervalls beim Regeln eine Änderung der Stromstärke (ΔI_{SP}) des durch die Stromquelle (24) abgegebenen Stroms (I_{SP}) pro Zeiteinheit (Δt) in Abhängigkeit von wenigstens einem Regelparameter kontinuierlich eingestellt wird, wobei die Änderung der Stromstärke (ΔI_{SP}) pro Zeiteinheit (Δt) in Abhängigkeit von einem jeweils gegenwärtigen Wert der Busgerätespannung (U_{VSP}) und/oder in Abhängigkeit von derer gegenwärtigen Änderung pro Zeiteinheit kontinuierlich eingestellt wird,
**dadurch gekennzeichnet, dass**
die Änderung der Stromstärke (ΔI_{SP}) pro Zeiteinheit (Δt) in Abhängigkeit von einer gegenwärtigen Differenz (U_{VCRx}) der Busgerätespannung (U_{VSP}) zu einer Busgerätespannung, welche vorherrscht, wenn keine Daten übertragen werden, kontinuierlich eingestellt wird und wobei die Änderung der Stromstärke (ΔI_{SP}) pro Zeiteinheit (Δt) im Vergleich zu einer vorangegangenen Änderung (ΔI_{SP}) pro Zeiteinheit (Δt) erhöht wird, wenn sich die Differenz (U_{VCRx}) erhöht, und die Änderung der Stromstärke (ΔI_{SP}) pro Zeiteinheit (Δt) im Vergleich zu einer vorangegangenen Änderung (ΔI_{SP}) pro Zeiteinheit (Δt) verringert wird, wenn sich die Differenz (U_{VCRx}) verringert.

2. Verfahren nach Anspruch 1, **dadurch gekennzeichnet, dass** die Änderung der Stromstärke (ΔI_{SP}) pro Zeiteinheit (Δt) in Abhängigkeit von der jeweils gegenwärtigen Stromstärke des von der Stromquelle (24) abgegebenen Stroms (I_{SP}) kontinuierlich eingestellt wird.

3. Verfahren nach Anspruch 1 oder 2, **dadurch gekennzeichnet, dass** die Änderung der Stromstärke (ΔI_{SP}) pro Zeiteinheit (Δt) in Abhängigkeit von der jeweils gegenwärtigen Stromstärke des über die Spannungsanschlüsse (30, 32) fließenden Stroms (I_{SV}) kontinuierlich eingestellt wird.

4. Verfahren nach einem der vorhergehenden Ansprüche, **dadurch gekennzeichnet**, die Änderung der Stromstärke (ΔI_{SP}) pro Zeiteinheit (Δt) zum jeweils gegenwärtigen Zeitpunkt anhand einer Kennlinie dieser Änderung (ΔI_{SP}) bezüglich einer vorgegebenen Größe (I_{SV}) festgelegt wird, wobei die Kennlinie aus einer Mehrzahl von abgelegten Kennlinien in Abhängigkeit von dem wenigstens einen Regelparameter ausgewählt wird.

5. Verfahren nach einem der Ansprüche 1 bis 3, **dadurch gekennzeichnet**, die Änderung der Stromstärke (ΔI_{SP}) pro Zeiteinheit (Δt) mittels einer vorgebbaren Funktion in Abhängigkeit von dem wenigstens einen Regelparameter kontinuierlich berechnet wird.

6. Verfahren nach einem der vorhergehenden Ansprüche, **dadurch gekennzeichnet, dass** beim Regeln während eines vorgebbaren weiteren Regelzeitintervalls eine Auswahl zwischen Regelszenarien aus einer Mehrzahl von Regelszenarien anhand vorgegebener Kriterien erfolgt, wobei bei Auswahl eines jeweiligen Regelszenarios die Stromstärke des durch die Stromquelle (24) abgegebenen Stroms (I_{SP}) mit einer dem Regelszenario zugeordneten Änderung (ΔI_{SP}) pro Zeiteinheit (Δt), die aufgrund einer Kennlinie dieser Änderung (ΔI_{SP}) bezüglich einer vorgegebenen Größe (I_{SV}) festgelegt wird, geändert wird.

7. Verfahren nach Anspruch 6, **dadurch gekennzeichnet, dass** die Auswahl wiederholt erfolgt und gegebenenfalls ein Wechsel des Regelszenarios erfolgt.

8. Verfahren nach Anspruch 6 oder 7, **dadurch gekennzeichnet, dass** die Auswahl in Abhängigkeit von der Busspannung (U_{BUS}) und der Busgerätespannung (U_{VSP}) erfolgt.

9. Verfahren nach einem der Ansprüche 6 bis 8, **dadurch gekennzeichnet, dass** die zur Festlegung der jeweiligen Änderung (ΔI_{SP}) pro Zeiteinheit (Δt) verwendete Kennlinie eine Kennlinie der jeweiligen Änderung (ΔI_{SP}) in Abhängigkeit von der Stromstärke des über die Spannungsanschlüsse (30, 32) fließenden Stroms (I_{SV}) ist.

10. Verfahren nach einem der Ansprüche 6 bis 9, **dadurch gekennzeichnet, dass** die vorgegebenen Kriterien umfassen, dass die Busgerätespannung (U_{BUS}) einen vorgebbaren Schwellwert überschreitet oder unterschreitet.

11. Vorschalteinrichtung zum Bereitstellen einer Busgerätespannung (U_{VSP}) für ein Busgerät (14), wenn die Vorschalteinrichtung an einen Kommunikationsbus (10, 12) angeschlossen ist, wobei von einem Eingang (22) der Vorschalteinrichtung zu einem Ausgang (30) der Vorschalteinrichtung über eine Stromquelle (24) und einen Schalter (26) eine elektrische Verbindung hergestellt ist, wobei bei einem Schalten des Schalters (26), insbesondere bei Empfang von Datensignalen am Eingang (22), eine Umschaltung auf eine elektrische Verbindung des Eingangs (22) über die Stromquelle (24) zu einer Abzweigschaltung erfolgt, und wobei eine am Ausgang (30, 32) anliegende Spannung durch Variation eines von der Stromquelle abgegebenen Stroms (I_{SP}) regelbar ist,
wobei die Vorschalteinrichtung Mittel zum Steuern umfasst, die die Stromquelle (24) im Betrieb derart ansteuern, dass der abgegebene Strom (I_{SP}) während des Regelns mit einer Änderung (ΔI_{SP}) pro Zeiteinheit (Δt) geändert wird, die in Abhängigkeit von wenigstens einem Regelparameter kontinuierlich eingestellt ist, wobei die Änderung der Stromstärke (ΔI_{SP}) pro Zeiteinheit (Δt) in Abhängigkeit von einem jeweils gegenwärtigen Wert der Busgerätespannung (U_{VSP}) und/oder in Abhängigkeit von derer gegenwärtigen Änderung pro Zeiteinheit kontinuierlich eingestellt wird,
**dadurch gekennzeichnet, dass** die Änderung der Stromstärke (ΔI_{SP}) pro Zeiteinheit (Δt) in Abhängigkeit von einer gegenwärtigen Differenz (U_{VCRx}) der Busgerätespannung (U_{VSP}) zu einer Busgerätespannung, welche vorherrscht, wenn keine Daten übertragen werden, kontinuierlich eingestellt wird und wobei die Änderung der Stromstärke (ΔI_{SP}) pro Zeiteinheit (Δt) im Vergleich zu einer vorangegangenen Änderung (ΔI_{SP}) pro Zeiteinheit (Δt) erhöht wird, wenn sich die Differenz (U_{VCRx}) erhöht, und die Änderung der Stromstärke (ΔI_{SP}) pro Zeiteinheit (Δt) im Vergleich zu einer vorangegangenen Änderung (ΔI_{SP}) pro Zeiteinheit (Δt) verringert wird, wenn sich die Differenz (U_{VCRx}) verringert.

## Claims

1. Method for regulating a bus device voltage (U_{VSP}) by means of a voltage regulation device, to the input of which a bus voltage (U_{BUS}) is fed via a communications bus, and which has voltage terminals (30, 32) for the bus device voltage (U_{VSP}), at which a variable load is present, wherein, on receipt of data signals via the communications bus, current, which in the absence of data signals flows across the voltage terminals (30, 32), is passed during a signal/time interval via a switch (26) into a branch circuit, wherein the voltage regulation device has a current source (24) which outputs a current (I_{SP}), the current intensity of which is constant as long as no regulation takes place, and the current intensity of which is changed if regulation is initiated as a result of deviation of the bus device voltage (U_{VSP}) from a setpoint (V_{REF}),
wherein, at least during a predeterminable regulation interval, a change in current intensity (ΔI_{SP}) of the current (I_{SP}) per unit time (Δt) output by the current source (24) is adjusted continuously during regulation as a function of at least one regulation parameter, wherein the change in current intensity (ΔI_{SP}) per unit time (Δt) is continuously adjusted as a function of a respective present value of the bus device voltage (U_{VSP}) and/or as a function of the present change thereof per unit time,
**characterised in that**
the change in current intensity (ΔI_{SP}) per unit time (Δt) is adjusted continuously as a function of a present difference (U_{VCRx}) between the bus device voltage (U_{VSP}) and a bus device voltage which prevails if no data is being transmitted, and wherein the change in current intensity (ΔI_{SP}) per unit time (Δt) is increased compared with a previous change (ΔI_{SP}) per unit time (Δt), if the difference (U_{VCRx}) increases, and the change in current intensity (ΔI_{SP}) per unit time (Δt) is reduced compared with a previous change (ΔI_{SP}) per unit time (Δt) if the difference (U_{VCRx}) deceases.

2. Method according to claim 1, **characterised in that** the change in current intensity (ΔI_{SP}) per unit time (Δt) is adjusted as a function of the respective present current intensity of the current (I_{SP}) output by the current source (24) .

3. Method according to claim 1 or 2, **characterised in that** the change in current intensity (ΔI_{SP}) per unit time (Δt) is continuously adjusted as a function of the respective present current intensity of the current (I_{SV}) flowing across the voltage terminals (30, 32).

4. Method according to one of the preceding claims,
**characterised in that** the change in current intensity (ΔI_{SP}) per unit time (Δt) is fixed for the respective present point in time on the basis of a characteristic curve of this change (ΔI_{SP}) relative to a predetermined variable (I_{SV}), wherein the characteristic curve is selected from a plurality of stored characteristic curves as a function of the at least one regulation parameter.

5. Method according to one of claims 1 to 3, **characterised in that** the change in current intensity (ΔI_{SP}) per unit time (Δt) is calculated by means of a predeterminable function as a function of the at least one regulation parameter.

6. Method according to one of the preceding claims,
**characterised in that**, during regulation, during a predeterminable further regulation interval, a selection is made between regulation scenarios from a plurality of regulation scenarios on the basis of predetermined criteria, wherein on selection of a respective regulation scenario the current intensity of the current (I_{SP}) output by the current source (24) is changed with a change (ΔI_{SP}) per unit time (Δt) associated with the regulation scenario which is fixed on the basis of a characteristic curve of this change (ΔI_{SP}) relative to a predetermined variable (I_{SV}) .

7. Method according to claim 6, **characterised in that** the selection proceeds repeatedly and optionally a changeover of the regulation scenario takes place.

8. Method according to claim 6 or 7, **characterised in that** the selection takes place as a function of the bus voltage (U_{BUS}) and of the bus device voltage (U_{VSP}) .

9. Method according to one of claims 6 to 8, **characterised in that** the characteristic curve used to fix the respective change (ΔIS_{P}) per unit time (Δt) is a characteristic curve of the respective change (ΔI_{SP}) as a function of the current intensity of the current (I_{SV}) flowing across the voltage terminals (30, 32).

10. Method according to one of claims 6 to 9, **characterised in that** the predeterminable criteria include the bus device voltage (U_{BUS}) not exceeding or falling below a predeterminable threshold value.

11. Voltage regulation device for providing a bus device voltage (U_{VSP}) for a bus device (14) if the voltage regulation device is connected to a communications bus (10, 12), wherein an electrical connection is produced from an input (22) of the voltage regulation device to an output (30) of the voltage regulation device via a current source (24) and a switch (26), wherein on switching of the switch (26), in particular on receipt of data signals at the input (22), switchover to an electrical connection of the input (22) takes place via the current source (24) to a branch circuit, and wherein a voltage present at the output (30, 32) is regulatable by varying a current (I_{SP}) output by the current source,
wherein the voltage regulation device comprises control means which drive the current source (24) in such a way in operation that the output current (I_{SP}) is changed during regulation with a change (ΔI_{SP}) per unit time (Δt) which is continuously adjusted as a function of at least one regulation parameter, wherein the change in current intensity (ΔI_{SP}) per unit time (Δt) is continuously adjusted as a function of a respective present value of the bus device voltage (U_{VSP}) and/or as a function of the present change thereof per unit time,
**characterised in that**
the change in current intensity (ΔI_{SP}) per unit time (Δt) is adjusted continuously as a function of a present difference (U_{VCRx}) between the bus device voltage (U_{VSP}) and a bus device voltage which prevails if no data is being transmitted, and wherein the change in current intensity (ΔI_{SP}) per unit time (Δt) is increased compared with a previous change (ΔI_{SP}) per unit time (Δt), if the difference (U_{VCRx}) increases, and the change in current intensity (ΔI_{SP}) per unit time (Δt) is reduced compared with a previous change (ΔI_{SP}) per unit time (Δt) if the difference (U_{VCRx}) deceases.

## Revendications

1. Procédé destiné à régler la tension (U_{VSP}) d'un appareil de bus au moyen d'un dispositif d'entrée sur l'entrée duquel une tension de bus (U_{BUS}) est amenée par le biais d'un bus de communication, et qui présente des bornes de tension (30, 32) pour la tension (U_{VSP}) de l'appareil de bus sur lesquelles la charge est variable, dans lequel lors de la réception de signaux de données par le biais du bus de communication, du courant, qui circule par les bornes de tension (30, 32) en l'absence de signaux de données, est dirigé dans un circuit de dérivation par un commutateur (26) pendant un intervalle de temps de signal, dans lequel le dispositif d'entrée présente une source de courant (24) qui délivre un courant (I_{SP}) dont l'intensité est constante tant qu'aucun réglage n'est effectué et dont l'intensité est modifiée lorsqu'en raison d'un écart de la tension (U_{VSP}) de l'appareil de bus par rapport à une valeur nominale (V_{REF}), un réglage est déclenché, dans lequel au moins pendant un intervalle de temps de réglage pouvant être prédéterminé lors du réglage, une modification de l'intensité (ΔI_{SP}) du courant (I_{SP}) délivré par la source de courant (24) par unité de temps (Δt) est ajustée en continu en fonction d'au moins un paramètre de réglage, dans lequel la modification de l'intensité de courant (ΔI_{SP}) par unité de temps (Δt) est ajustée en continu en fonction d'une valeur actuelle respective de la tension (U_{VSP}) de l'appareil de bus et/ou en fonction de sa modification actuelle par unité de temps,
**caractérisé en ce que**
la modification de l'intensité de courant (ΔI_{SP}) par unité de temps (Δt) est ajustée en continu en fonction d'une différence (U_{VCRx}) actuelle de la tension (U_{VSP}) de l'appareil de bus par rapport à une tension de l'appareil de bus qui règne lorsque aucune donnée n'a été transmise et dans lequel la modification de l'intensité de courant (ΔI_{SP}) par unité de temps (Δt) est augmentée par comparaison à une modification précédente (ΔI_{SP}) par unité de temps (Δt) lorsque la différence (U_{VCRx}) augmente, et la modification de l'intensité de courant (ΔI_{SP}) par unité de temps (Δt) est baissée par comparaison à une modification précédente (ΔI_{SP}) par unité de temps (Δt) lorsque la différence (U_{VCRx}) baisse.

2. Procédé selon la revendication 1, **caractérisé en ce que** la modification de l'intensité de courant (ΔI_{SP}) par unité de temps (Δt) est ajustée en continu en fonction de l'intensité de courant actuelle respective du courant (I_{SP}) délivré par la source de courant (24).

3. Procédé selon la revendication 1 ou 2, **caractérisé en ce que** la modification de l'intensité de courant (ΔI_{SP}) par unité de temps (Δt) est ajustée en continu en fonction de l'intensité de courant actuelle respective du courant (I_{SV}) circulant par les bornes de tension (30, 32).

4. Procédé selon l'une des revendications précédentes,
**caractérisé en ce que** la modification de l'intensité de courant (ΔI_{SP}) par unité de temps (Δt) est déterminée au moment actuel respectif à l'aide d'une ligne caractéristique de cette modification (ΔI_{SP}) relative à une grandeur (I_{SV}) prédéterminée, dans lequel la ligne caractéristique est sélectionnée parmi une pluralité de lignes caractéristiques réalisées, en fonction de l'au moins un paramètre de réglage.

5. Procédé selon l'une des revendications 1 à 3, **caractérisé en ce que** la modification de l'intensité de courant (ΔI_{SP}) par unité de temps (Δt) est calculée en continu au moyen d'une fonction pouvant être prédéterminée en fonction de l'au moins un paramètre de réglage.

6. Procédé selon l'une des revendications précédentes,
**caractérisé en ce que** lors du réglage pendant un intervalle de temps supplémentaire pouvant être prédéterminé, une sélection entre des scénarios de réglage d'une pluralité de scénarios de réglage est effectuée à l'aide de critères prédéterminés, dans lequel lors de la sélection d'un scénario de réglage respectif, l'intensité du courant (I_{SP}) délivré par la source de courant (24) est modifiée par une modification (ΔI_{SP}) attribuée au scénario de réglage par unité de temps (Δt) qui a été déterminée en se basant sur une ligne caractéristique de cette modification (ΔI_{SP}) relative à une grandeur (I_{SV}) prédéterminée.

7. Procédé selon la revendication 6, **caractérisé en ce que** la sélection est répétée et le cas échéant, un changement du scénario de réglage a lieu.

8. Procédé selon la revendication 6 ou 7, **caractérisé en ce que** la sélection est effectuée en fonction de la tension de bus (U_{BUS}) et de la tension (U_{VSP}) de l'appareil de bus.

9. Procédé selon l'une des revendications 6 à 8, **caractérisé en ce que** la ligne caractéristique employée pour la détermination de la modification (ΔI_{SP}) respective par unité de temps (Δt) est une ligne caractéristique de la modification (ΔI_{SP}) respective en fonction de l'intensité du courant (I_{SV}) circulant par les bornes de tension (30, 32).

10. Procédé selon l'une des revendications 6 à 9, **caractérisé en ce que** les critères prédéterminés comprennent que la tension de bus (U_{BUS}) est au-delà, respectivement en-deça d'une valeur seuil pouvant être prédéterminée.

11. Dispositif d'entrée destiné à fournir une tension (U_{VSP}) d'un appareil de bus pour un appareil de bus (14) lorsque le dispositif d'entrée est raccordé à un bus de communication (10,12), dans lequel une liaison électrique est établie d'une entrée (22) du dispositif d'entrée vers une sortie (30) du dispositif d'entrée par le biais d'une source de courant (24) et d'un commutateur (26), dans lequel lors d'un branchement du commutateur (26), en particulier lors de la réception de signaux de données sur l'entrée (22), il est effectué une commutation sur une liaison électrique de l'entrée (22) par le biais de la source de courant (24) vers un circuit de dérivation, et dans lequel une tension en sortie (30, 32) peut être réglée en variant un courant (I_{SP}) délivré par la source de courant, dans lequel le dispositif d'entrée présente des moyens de commande qui commandent la source de courant (24) en fonctionnement de façon à ce que le courant (I_{SP}) délivré soit modifié pendant le réglage avec une modification (ΔI_{SP}) par unité de temps (Δt) qui est ajustée en continu en fonction d'au moins un paramètre de réglage,
dans lequel la modification de l'intensité de courant (ΔI_{SP}) par unité de temps (Δt) est ajustée en continu en fonction d'une valeur actuelle respective de la tension (U_{VSP}) de l'appareil de bus et/ou en fonction de sa modification actuelle par unité de temps,
**caractérisé en ce que**
la modification de l'intensité de courant (ΔI_{SP}) par unité de temps (Δt) est ajustée en continu en fonction d'une différence (U_{VCRx}) actuelle de la tension (U_{VSP}) de l'appareil de bus par rapport à une tension de l'appareil de bus qui règne lorsque aucune donnée n'est transmise et dans lequel la modification de l'intensité de courant (ΔI_{SP}) par unité de temps (Δt) est augmentée par comparaison à une modification précédente (ΔI_{SP}) par unité de temps (Δt) lorsque la différence (U_{VCRx}) augmente, et la modification de l'intensité de courant (ΔI_{SP}) par unité de temps (Δt) est baissée par comparaison à une modification précédente (ΔI_{SP}) par unité de temps (Δt) lorsque la différence (U_{VCRx}) baisse.
